# EUROPEAN PATENT APPLICATION

(11) **EP 1 491 330 A2**
(43) Date of publication of application: **29.12.2004**
(21) Application number: 04076745.1
(22) Date of filing: 11.06.2004
(51) Int. Cl.: B32B 31/08, B32B 31/12, B32B 27/12

(54) **Method for manufacturing a translucent laminate and laminate produced thereby**

(30) Priority: 23.06.2003 US 602473
(71) Applicant: Intex Recreation Corp., Long Beach, CA 90810-1440 (US)
(72) Inventor: Lin, Hua Hsiang, 66 Mody Road, Kowloon, Hong Kong (CN); Hsu, Yaw Yuan, Taipei (TW)
(74) Representative: Kupecz, Arpad

(57) **Abstract**

A process for manufacturing a translucent laminate product comprised of at least two outer vinyl layers (10,12) disposed around at least one inner scrim layer (11) said process comprised of substantially coating the scrim layer (11) with a suitable adhesive and removing excess adhesive from the interstices of the scrim material (11). The scrim and adhesive are then brought to a suitable temperature for bonding with the outer vinyl layers (10,12). The outer vinyl layers are also heated to a suitable temperature for bonding and all layers are brought together in a nip (18) which applies pressure sufficient to bond the vinyls layers (10,12) with the scrim (11).

## Description

### BACKGROUND OF THE INVENTION

The present invention generally relates to translucent laminate sheets consisting of at lease two outer layers disposed around an inner reinforcing layer and methods for making the same. More specifically the invention relates to the process of making reinforced translucent laminates which are fluid impermeable such that they can be used to construct such articles as above ground swimming pools, flotation devices, canopies, awnings, tarpaulins, inflatable furniture, inflatable toys, inflatable boats, and the like.

### SUMMARY OF THE INVENTION

Translucent laminate sheets which have reinforcing middle layers are not new to the art. For example, Eysel et al., U.S. Patent Number 6,468,928, discloses a translucent laminate made of a textile net middle layer disposed between two cover layers made of translucent films as used in this specification "translucent" means permitting the passage of light and "translucence" means the state or quality of being translucent. Translucence can be measured by any of several methods of measuring light transmissions through solids as are well known to the art.

In order to bond the various layers, Eysel discloses bringing the layers together at temperatures hot enough to melt the outer cover layers and applying pressure to the melted cover layers forcing them to penetrate through the openings or interstices existing between the warp and fill of the mesh middle layer and bond with one another. The difficulty with this approach is that at the required temperature and pressure the outer cover layers may begin to degrade leading to holes in the two outer cover layers. Such degradation of the integrity of the cover layers will in turn lead to a loss of fluid impermeability.

Another method for making the translucent laminates is to use adhesives as opposed to melting heat and pressure to bond the multiple layers together. This method avoids the degradation problems associated with the heat and pressure method. In this method, the three layers are again brought together at a single point in the process, one or more of the layers having been coated with an adhesive. Pressure and heat are generally used in this procedure as well, albeit much less heat and pressure are required. Thus the final laminate produced does not suffer from the degradation associated with the products produced by the process disclosed in Eysel.

However, this method also has its shortcomings. One significant shortcoming is the presence of excess adhesive which leads to degraded translucence in the finished laminate. This is because the suitable adhesives used in this process are more opaque than translucent. When the adhesive is applied either directly to one or both, of the outer translucent layers, or to the scrim layer, it is very difficult to apply sufficient adhesive to insure the required bonding of the layers occurs without applying excess adhesive that adversely affects the translucence of the finished laminate. One reason for the lessening of the translucence can be the accumulation of excess adhesive between the multiple layers during the lamination process. If this excess adhesive is not removed, then it will become trapped in the interstitial spaces of the scrim when the outer layers are bonded to the scrim during the lamination process. This trapped adhesive adds an additional layer of some what opaque matter between the two outer translucent vinyl sheets thereby partially obstructing or diffusing the light that would normally be able to pass through the interstices of the scrim.

It is an object of the present invention to provide an improved translucent laminate sheet which maintains its structural integrity while at the same time maximizing the translucence of the final product. The degree of translucence desired for a finished laminate will be dependent on the intended use of the laminate. No solid will have zero light absorption. However, the invention provides a method and laminate with greater translucence than can be achieved by prior art methods using the same materials for the laminate layers and adhesive.

### BRIEF DESCRIPTION OF THE DRAWINGS

Some of the objects and advantages of the present invention are shown in the detailed description that follows and the accompanying drawings, which are not necessarily drawn to scale:
**FIG. 1** is an exploded view of a translucent laminate made in accordance with the invention;
**FIG. 2** is a perspective view of a translucent laminate made in accordance with the invention which demonstrates its translucence;
**FIG. 3** is a schematic representation of a process and apparatus which might be used to manufacture the translucent laminate in accordance with the invention.

### DETAILED DESCRIPTION OF THE INVENTION

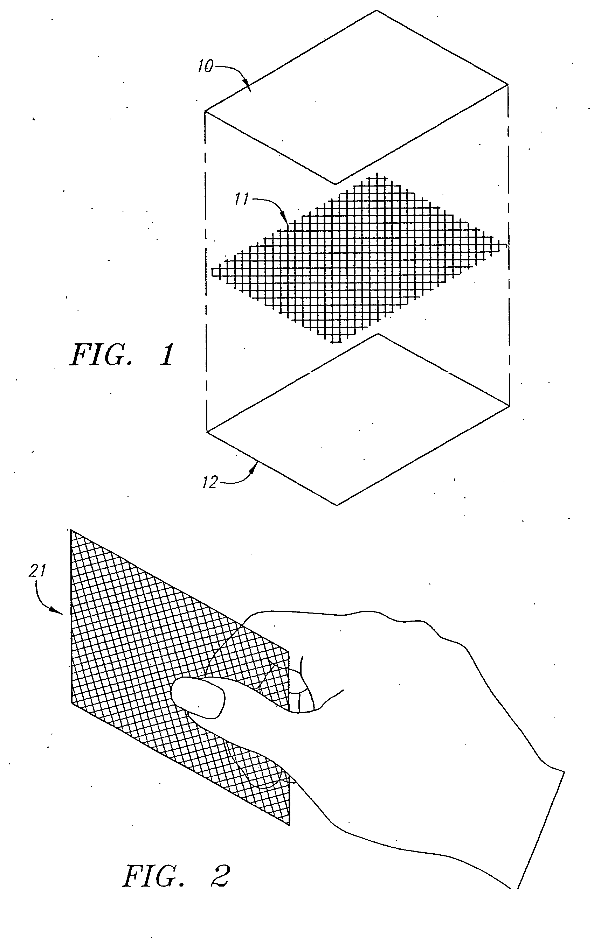

With reference to the drawings, FIG. **1** illustrates an exploded view of the product produced by one embodiment of the present invention which is comprised of a first outer layer **10** and a second outer layer **12**, both of which are disposed around a middle reinforcing scrim layer **11.** The outer layers **10** and **12** are generally made of a translucent vinyl. Polyvinyl chloride ("PVC") or polyvinyl fluoride ("PVF") are the preferred types of translucent vinyls used in the present invention but other types of polyolefin materials such as polyethylene may also be used. The reinforcing or scrim layer **11** is generally a woven material made of a warp and fill both constructed of a synthetic material such as polyester, polyamide, aromatic polyamide, or rayon.

The thickness of the vinyl layers **10** and **12** can vary depending on the intended use of the final laminate product. The thicker the vinyl sheeting, the greater the strength of the final product. However, since an object of the present invention is to produce a final laminate with increased translucence, the vinyl used should not be so thick as to be opaque. It has been determined that a preferred practical range of thickness for each layer is between .220 mm and .4 mm. However, as will be appreciated by those skilled in the art, very translucent materials can be thicker and very strong materials can be thinner. Any combination which produces a finished laminate with the desired translucence is within the scope of the present invention.

In another embodiment of the invention the thickness of the two outer sheets **10** and **12** can be different. For example, one outer layer may be thicker than the other such that no raised grid lines will be detectible to the touch on the side of the laminate with the thicker outer layer.

As is appreciated and as is well known in the art, the scrim **11** may be comprised of a woven synthetic material, such as polyester. The scrim is comprised of interlacing warp and fill strands. The fill strands are also sometimes referred to as weft strands, however, for consistency, the term fill will be used herein. As will be apparent to those skilled in the art a more translucent scrim will add to the translucence of the final product.

The scrim **11** can be constructed with varying weave density and strand size. The weave density and strand size will effect the strength and translucence of the laminate produced. For example, the translucence of the laminate depends, in part, on how loose or tight the scrim **11** is woven. If the weave of the scrim is too tight then the laminate will have decreased translucence. If the weave of the scrim **11** is too loose, then it will not provide adequate strength for the laminate. Likewise the thickness of the strands used for the warp and fill can affect both the strength and translucence. The thicker the strands the greater the strength.

The weave density in the present invention is preferably between 3 to 20 strands per inch for both the warp and fill with a preferred practical range between 10 to 12 strands per inch for the warp and 9 to 10 strands per inch for the fill. The thickness of the warp and fill strands preferably ranges between 500 to 2000 denier, with 1000 denier, plus or minus 200 denier, being a preferred size. For example, the warp and fill utilized can be composed of strands of different denier. If more strength is desired along one axis of the weave, for example along the direction of the warp, a larger denier strand can be used for the warp than that used for the fill.

Figure **2** is an example of a product produced by the process as described herein. As can be seen, while the polyester scrim is visible, the laminate **21** remains translucent. In some instances, it is desirable to tint the laminate **21** various colors. This can be done by several methods.

In one embodiment, one of the outer vinyl layers, **10** or **12,** is made in a preferred color. In another embodiment, the scrim **11** is woven from strands which have the desired color. And in still another embodiment, the adhesive used to bond the multiple layers together will contain a pigment or die of the desired color. Additionally, if desired, patterns or shapes can be applied to one of the multiple layers so that images are created instead of one solid color.

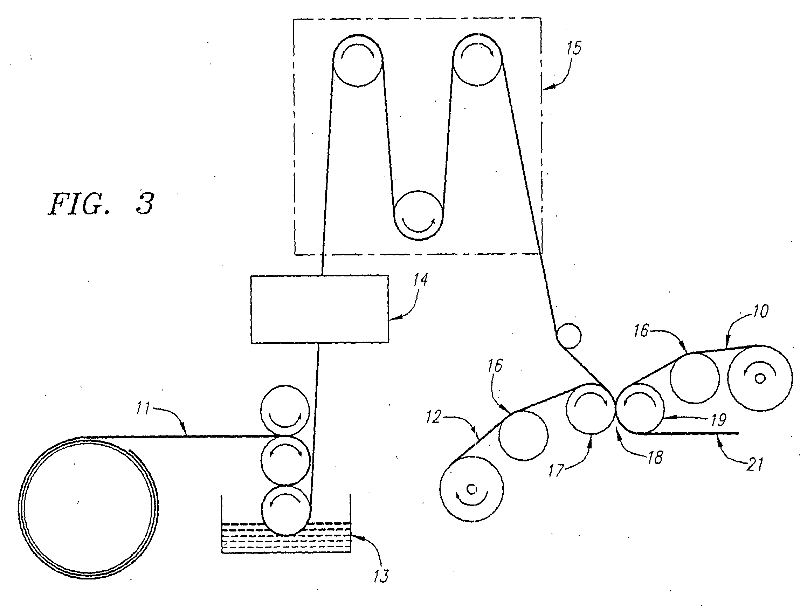

Turning now to FIG **3**, the method for making the above described laminate will be explained. Figure **3** is a schematic representation of a method for making a laminate with improved translucence. The process depicted in FIG **3** is used to produce a laminate containing a single middle scrim layer and two outer vinyl layers.

The scrim **11** enters the process and is immersed in liquid adhesive contained in an adhesive tray **13**. The adhesive used is a typical plastisol adhesive generally known to those skilled in the art to be suitable for bonding vinyls.

In one embodiment of the present invention an adhesive consisting of a mixture of methyl ethyl ketone, isocyanate and polyurethane resin is employed. Each of the ingredients is added to the adhesive compound in liquid form. When mixed a preferred adhesive contains the following approximate ratios of individual ingredients by volume: 100 parts polyurethane resin; 5 parts methyl ethyl ketone; and between 1.5 and 4 parts isocyanate. Such adhesives and the ranges of their components are well known to those skilled in the art and are readily compounded or purchased commercially.

After exiting the adhesive tray **13,** the scrim is substantially coated in adhesive. In order to remove the excess adhesive, which if left in place would reduce the translucence of the final product, the scrim then passes through a step for substantially removing the excess adhesive.

In FIG **3** the excess adhesive removal step occurs at **14**. Several methods for removing the excess adhesive may be used. In one embodiment the method may consist of a fan or other device which forces air or other fluids through the interstices in the scrim **11** thereby removing most of the excess adhesive.

In another embodiment, the adhesive covered scrim **11** is passed between a set of rollers. The rollers are placed such that as the scrim **11** passes between them under pressure most of the excess adhesive is squeezed out from between the interstices of the scrim.

In another embodiment, the method for removal may consist of a roller upon which small raised bumps are disposed. As the scrim **11** passes across the roller's surface, the bumps force most of the excess adhesive out of the interstices of the of the scrim **11**.

In another embodiment, the scrim **11** can be passed across a roller upon which grooves have been etched, or otherwise formed, by methods well known to those skilled in the art. The grooves correspond to the size and pattern of the scrim **11.** As the scrim **11** moves across the roller it fills the corresponding groves thereby forcing most of the excess adhesive out of the interstices, leaving the interstitial spaces substantially free of adhesive. In either this or the preceding embodiments the excess adhesive forced out of the scrim can be recovered by a take-up roller or sheet (not shown) or by other methods well known to those skilled in the art.

As the scrim **11** exits the removal step **14**, adhesive mainly coats the portions of the scrim **11** which will be in contact with the outer vinyl sheets **10** and **12**. Thus, when all three layers of the laminate are brought together and compressed the interstices of the scrim **11** will be substantially free of adhesive and the laminate **21** produced will possess greater translucence than if the excess adhesive had not been removed.

Once the scrim **11** exits step **14** it then passes through an oven **15** where the adhesive and scrim **11** are brought to a suitable temperature for proper bonding with the outer vinyl layers **10** and **12**. Such temperatures are well known to those skilled in the art. Other methods of providing the bonding heat, such as heated rollers (not shown) are also well known to the art.

In a preferred embodiment, the temperature in the oven for heating the scrim and adhesive can be up to 107 degrees Celsius. In one embodiment the scrim coated with adhesive is heated for approximately 1 minute in an oven set at a temperature between 98 to 104 degrees Celsius.

Advantageously, the two outer vinyl layers, **10** and **12**, can also be heated before being laminated with the scrim **11.** This reduces the heat input required in the bonding step. As with the scrim **11,** the vinyl layers, **10** and **12,** may be passed through an oven or over heated rollers (not shown). This oven may, for example, be set to a temperature of up to 180 degrees Celsius. In one embodiment the vinyl layers, **10** and **12**, are heated for approximately 1 minute in an oven set at a temperature between 176.5 and 178.5 degrees Celsius. Those skilled in the art will readily recognize that the scrim and outer layer heating steps are interrelated, the goal being to bring the tree layers to a temperature at which effective bonding occurs without degrading any of the layers.

Once heated, the scrim **11** and vinyl layers, **10** and **12**, must be compressed with sufficient pressure to ensure proper bonding. This compression may be accomplished by passing the multiple layers through a nip. In FIG 3 a nip **18** is formed by roller **17** and **19.** The pressure exerted by the nip **18** can be adjusted by adjusting the spacing between rollers **17** and **19**. In one embodiment the nip **18** exerts a pressure on the scrim **11** and vinyl layers, **10** and **12,** of approximately 40 to 60 kilograms per square centimeter. Rollers **17** and **19** are rotated by a motor, or motors, (not shown) or other means well known in the art, in the direction such that the scrim **11** and two outer vinyl layers **10** and **12** are pulled through the nip **18.**

Once all three layers of the laminate pass through the nip **18** they are allowed to cool for at least 10 seconds at room temperature. The new laminate product **21** can then be stored or fabricated into a finished product such as a swimming pool.

Although specific embodiments of the invention have been discussed above in some detail it is to be understood that these are offered for purposes of illustration only and are not to be construed as limiting. The actual scope of the invention is defined by the claims which are set forth below.

## Claims

1. A method for manufacturing a translucent laminate, said laminate consisting of at least one woven scrim layer disposed between at least two outer vinyl translucent layers;
said method comprising:
a. A step for substantially coating said scrim with a suitable plastisol adhesive;
b. A step for substantially removing said adhesive from the interstices between the warp and fill of said scrim;
c. A step for heating said scrim and said adhesive to a suitable temperature for bonding said scrim and said adhesive to said outer vinyl layers;
d. A step for heating said outer vinyl layers to a suitable temperature for bonding with said adhesive and said scrim; and
e. A step for bringing said scrim and said vinyl layers together under sufficient pressure and at a suitable temperature such that the said outer vinyl layers bond to said scrim.

2. The method of claim 1 wherein the warp and fill strands of said scrim are comprised of a polyester material.

3. The method of claim 1 wherein the warp and fill strands of said scrim are comprised of a polyamide.

4. The method of claim 1 wherein the warp and fill strands of said scrim are comprised of an aromatic polyamide.

5. The method of claim 1 wherein the warp and fill strands of said scrim are comprised of rayon.

6. The method of claim 1 wherein the adhesive used is comprised of a mixture of methyl ethyl ketone, isocyanate and polyurethane.

7. The method of claim 1 wherein the outer vinyl layers are comprised of a polyolefin.

8. The method of claim 1 wherein the outer vinyl layers are comprised of polyvinyl chloride.

9. The method of claim 1 wherein the outer vinyl layers are comprised of polyvinyl fluoride.

10. The method of claim 1 wherein the outer vinyl layers have a thickness between .225 mm to .4 mm.

11. The method of claim 1 wherein the outer vinyl layer has a thickness greater than .220mm.

12. The method of claim 1 wherein the warp and fill of the scrim are comprised of strands each with a thickness greater than 500 denier.

13. The method of claim 1 wherein the warp and fill of the scrim are comprised of strands with a thickness up to 2000 denier.

14. The method of claim 1 wherein the warp of the scrim is comprised of between 3 to 20 strands per inch.

15. The method of claim 1 wherein the fill of the scrim is comprised of between 3 to 20 strands per inch.

16. The method of claim 1 wherein the vinyl layers are heated for up to 1 minute in an oven set at a temperature of at least 170 degrees Celsius and the scrim coated with adhesive is heated for up to 1 minute in an oven set at least at 98 degrees Celsius.

17. A method as claimed in claim 1 further comprising a method for tinting the laminate a particular color.

18. A method for manufacturing a translucent laminate, said laminate consisting of at least one woven scrim layer disposed between at least two outer vinyl translucent layers;
said method comprising:
a. A step for substantially coating said scrim with an adhesive comprised of a mixture of methyl ethyl ketone, isocyanate and polyurethane;
b. A step for substantially removing said adhesive from the interstices between the warp and fill of said scrim;
c. A step for heating said scrim coated with said adhesive for at least 30 seconds in an oven set between 98 and 104 degrees Celsius and heating said vinyl layers for at least 30 seconds in an oven set at a temperature between 175 and 180 degrees Celsius; and
d. A step for bringing said scrim and said vinyl layers together under sufficient pressure and at a suitable temperature such that said vinyl layers bond to said scrim.

19. A method for manufacturing a translucent laminate, said laminate consisting of at least one woven scrim layer disposed between at least two outer vinyl translucent layers, wherein the scrim layer is comprised of a warp and a fill each with a density of between 1 to 20 strands per inch and a thickness between 500 to 2000 Denier;
said method comprising:
a. A step for substantially coating said scrim with an adhesive comprised of a mixture of methyl ethyl ketone, isocyanate and polyurethane;
b. A step for substantially removing said adhesive from the interstices between the warp and fill of said scrim;
c. A step for heating said scrim coated with said adhesive for at least 30 seconds in an oven set at a temperature of at least 98 degrees Celsius and heating said vinyl layers for at least 30 seconds in an oven set at a temperature of at least 175 degrees Celsius; and
d. A step for compressing said scrim and said vinyl layers together with a force between 40 and 60 kilograms per square centimeter at a suitable temperature such that said outer vinyl layers bond with said scrim.

20. A translucent laminate product produced by the method as claimed in any one of the preceding claims.
